# EUROPÄISCHE PATENTSCHRIFT

(11) **EP 3 290 321 B1**
(45) Veröffentlichungstag und Bekanntmachung des Hinweises auf die Patenterteilung: **19.02.2020**
(21) Anmeldenummer: 17001371.8
(22) Anmeldetag: 10.08.2017
(51) Int. Cl.: B62M 3/08

(54) **ERGONOMISCHES FAHRRADPEDAL**
ERGONOMIC BICYCLE PEDAL
PÉDALE ERGONOMIQUE DE VÉLO

(30) Priorität: 31.08.2016 DE 202016005514 U
(43) Veröffentlichungstag der Anmeldung: 07.03.2018
(73) Patentinhaber: SQlab GmbH, 82024 Taufkirchen (DE)
(72) Erfinder: Hild, Tobias, 82024 Taufkirchen (DE)
(74) Vertreter: Koelle, Alexander

(56) Entgegenhaltungen:
- EP-A1- 0 075 510
- CN-U- 201 761 616
- CN-Y- 2 140 343
- CN-Y- 2 191 818
- FR-A- 567 024
- FR-A1- 2 512 770
- GB-A- 572 157
- US-A- 546 071
- US-A- 701 028

## Beschreibung

Die Erfindung betrifft ein Pedal für ein Zweirad, insbesondere ein Fahrrad, bestehend aus einem Pedalköper mit einer herkömmlichen Pedalachse und mit herkömmlicher Lagerung. Unter einem Zweirad wird ein lenkergeführtes Fahrrad, wie ein übliches Fahrrad, ein Mountain-Bike, ein Rennrad, ein Motorrad und ein Mofa, aber auch ein Motorrad mit zwei hinteren Antriebsrädern und einem Vorderrad verstanden.

Bekannt sind zwei Arten von herkömmlichen Ausführungsformen von Pedalen für Zweiräder, nämlich sog. Clickpedale und Plattformpedale. Derartige Clickpedale sind z.B. bekannt aus EP 0 146 454 B1 der Look SA oder EP 2 020 371 B1 von Look Cycle International. Spezielle Ausgestaltungen von Plattformpedalen sind bekannt aus DE 93 139 A, DE 10 2012 105 104 A1, DE 20 2011 000 213 U1, DE 10 2012 104 231 A1, WO 2014/ 008 546 A1 sowie EP 2 535 253 B1. Die vorliegende Erfindung betrifft Plattformpedale.

Bei DE 93 139 A handelt es sich aber um ein Fahrradpedal, welches lediglich ein Abgleiten der Füße von den Fußtritten der Fahrrad-Tretkurbel verhindern soll.

Aus biomechanischer und anatomischer Sicht bewegt sich während der Hebebewegung des Fußes bei den meisten Menschen die Ferse nach außen und beim Senken, also dem Treten nach unten, wieder nach innen.

Die meisten Pedale mit Clickmechanismus lassen diese Bewegung zu, bevor der seitliche Widerstand des Clickmechanismus zu spüren ist. Plattformpedale müssen allerdings eine griffige Oberfläche haben, um ein unbeabsichtigtes Abrutschen zu verhindern. Nachteil einer griffigen Oberfläche ist aber, dass zu einer erhöhten Belastung auf das Kniegelenk kommt, da der Fuß in seiner natürlichen Bewegung eingeschränkt ist. Dies hat zur Folge, dass herkömmliche Pedale mit einer eher rutschigen Oberfläche ausgestattet und versehen sind, damit diese Drehbewegung mehr oder weniger erlaubt wird. Allerdings kann der Fahrradfahrer mit seinem beschuhten Fuß von einem derartigen Pedal leicht abrutschen und sich verletzen. Dieses Verletzungsrisiko lässt sich durch eine sehr griffige Oberfläche des Pedals vermeiden. Dadurch wird das Risiko eines Abrutschens des beschuhten Fußes vom Plattformpedal minimiert. Allerdings kann sich dann aber auch der beschuhte Fuß auf dem Plattformpedal nicht mehr im gewünschten Sinne drehen bzw. rotieren.

Bekannt sind ferne Pedale mit verschiedenen, aber insbesondere mit längeren Achsen um eine von oben betrachtet V-förmige Fußstellung zu ermöglichen. Diese Verbesserung der Biomechanik löst das Problem der Fußrotation während der Tretbewegung aber nicht vollständig.

Bekannt sind desweiteren Pedale mit einem Grundkörper, dem Pedalkörper, auf dem ein sogenanntes Griptape, ein Klebeband mit rauher Oberfläche geklebt ist.

Aufgabe der vorliegenden Erfindung ist es, eine Trittfläche eines Plattformpedals mit ausreichend hoher Haftreibung zwischen Schuh und Pedal zu erreichen, um ein unbeabsichtigtes Abrutschen zu verhindern und gleichzeitig aber auch eine Rotation des Fußes um ca. +/- 7° zuzulassen. Aufgabe ist ferner komplizierte Gelenke, eine komplizierte Mechanik sowie sich zusätzlich drehende und bewegende Teile, wie z.B. beim Clickpedal nach EP 0 146 454 B1 oder EP 2 020 371 B1, zu vermeiden, da Pedale hochbelastete Bauteile eines Fahrrades sind. Pedale werden getreten und sind einer erheblichen Schmutz- und Dreckbelastung ausgesetzt, wobei sie sich aber ständig drehen müssen. Beim Sturz auf den Boden knallt ein Pedal gerne als erstes auf den Asphalt, gegen einen Bordstein, Felsen oder ein sonstiges Hindernis. Ein Pedal sollte von daher möglichst einfach und simpel gestaltet und konstruiert sein, insbesondere auch, um eine lange Haltbarkeit und durchgehende Funktionsfähigkeit über die sehr lange gewünschte Gebrauchs- und Lebensdauer eines Pedals zu erreichen.

Die US546071 offenbart die Merkmale des Oberbegriffes des Anspruchs 1. Die Aufgabe der vorliegenden Erfindung wird erfindungsgemäß durch die kennzeichnenden Merkmale des ersten Schutzanspruchs gelöst.

Der nicht beanspruchte Pedalkörper besteht aus einem an einer Seite offenen Pedalkörperrahmen und einer Pedalachsenhülse. Dieser Pedalkörperrahmen ist mittels jedenfalls zwei flexibler Streben, vorzugsweise aber vier oder sechs flexibler Streben, an der Pedalhülsenachse befestigt und ermöglicht dadurch eine horizontale oder seitliche Rotation bzw. Verdrehung des Pedalkörpers relativ zur Pendelachse und zur Pedalachsenhülse. Dadurch wird es möglich, dass der beschuhte Fuß im Bereich von bis zu +/- 7° während der Tretbewegung zusammen mit dem Pedalkörper rotieren oder sich verdrehen kann. Der beanspruchte Pedalkörperrahmen ist geschlossen und die Seitenteile des Pedalkörperrahmens sind nach innen in den Pedalkörperrahmen hinein und zur Pedalachse hin gebogen oder geschwungen. Auf diese Weise stellen die Seitenteile des Pedalkörperrahmens die flexiblen Streben zur Befestigung des Pedalkörperrahmens an der Pedalhülsenachse dar. Dadurch wird die horizontale oder seitliche Rotation bzw. Verdrehung des Pedalkörperrahmens relativ zur Pedalachse und zur Pedalachsenhülse ermöglicht und auch dass der beschuhte Fußes im Bereich von bis zu +/- 7° während der Tretbewegung zusammen mit dem Pedalkörper rotieren oder sich verdrehen kann. Die gebogenen oder geschwungenen Seitenteile des Pedalkörperrahmens sind mit einer weiteren, gewellten und/oder flexiblen Strebe oberhalb und unterhalb der Pedalachsenhülse verbunden, wodurch die Rotation oder Verdrehung besser und besonders vorteilhaft steuerbar und regulierbar ist.

In der Zeichnung zeigt:

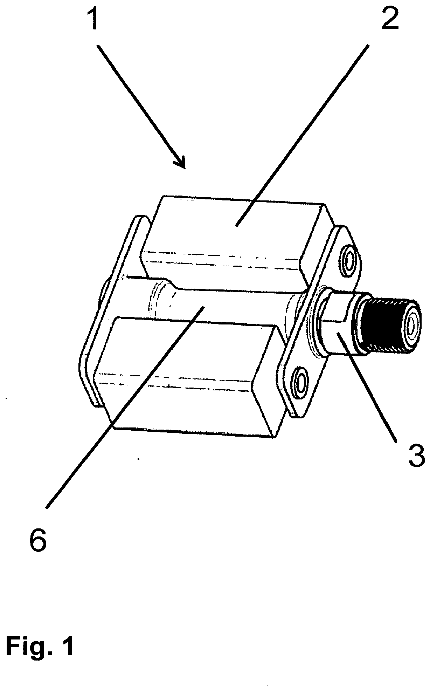

Fig. 1 eine perspektivische Ansicht eines herkömmlichen Plattformpedals 1 mit Pedalkörper 2 mit griffiger oder rauhen Oberfläche, Pedalachse 3 und Pedalachsenhülse 6

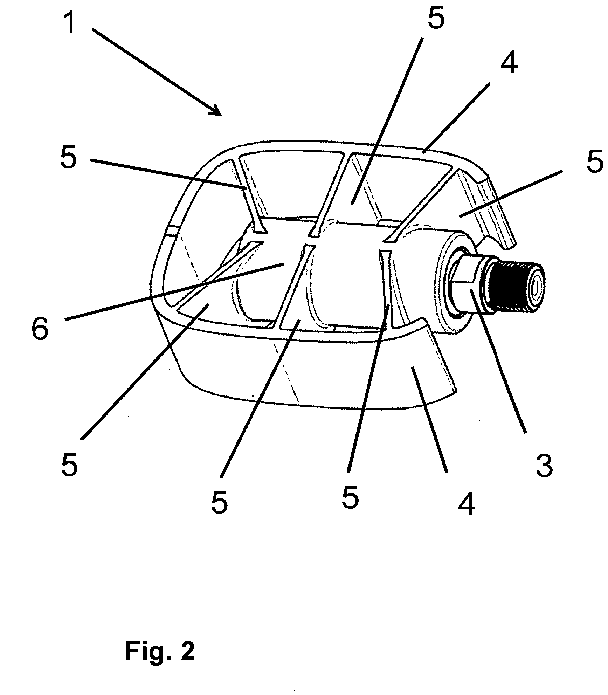

Fig. 2 eine perspektivische Ansicht des Pedals 1 mit einem an einer Seite offenen Pedalkörperrahmen 4, den Streben 5, der Pedalachse 3 und der Pedalachsenhülse 6

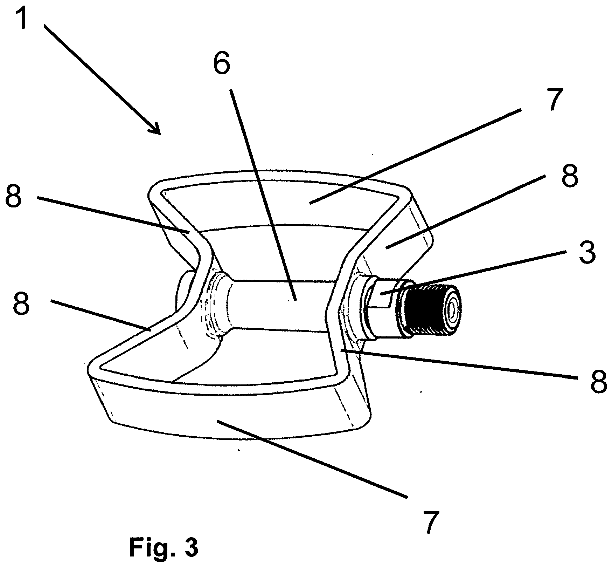

Fig. 3 eine perspektivische Ansicht des Pedals 1 mit einem geschlossenem Pedalkörperrahmen 7, der Pedalachse 3, der Pedalachsenhülse 6 und den nach innen in den Pedalkörper hinein und zur Pedalachsenhülse hin gebogenen oder geschwungenen Seitenteilen 8 des Pedalkörperrahmens 7

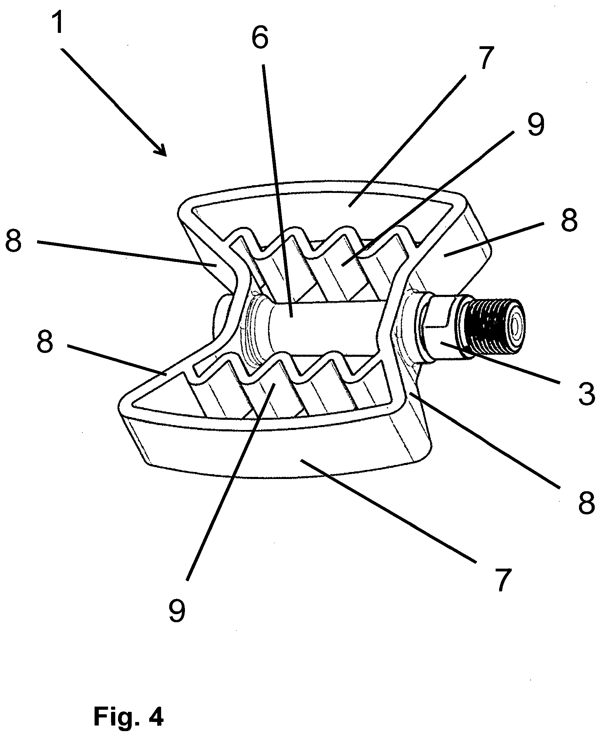

Fig. 4 eine perspektivische Ansicht des Pedals 1 mit einem geschlossenem Pedalkörperrahmen 7, der Pedalachse 3, der Pedalachsenhülse 6 und den nach innen in den Pedalkörper hinein und zur Pedalachsenhülse hin gebogenen oder geschwungenen Seitenteilen 8 des Pedalkörperrahmens 7 und der weiteren, gewellten und/oder flexiblen Strebe 9

### Bezugszeichenliste

- 1: Plattformpedal, Pedal
- 2: Pedalkörper
- 3: Pedalachse
- 4: Pedalkörperrahmen, nach einer Seite hin offen
- 5: Flexible Streben
- 6: Pedalachsenhülse
- 7: Pedalkörperrahmen, geschlossen
- 8: Seitenteil des Pedalkörperrahmens, nach innen in den Pedalkörperrahmen hinein und zur Pedalachsenhülse hin geschwungen oder gebogen
- 9: Gewellte und/oder flexible Strebe

## Patentansprüche

1. Fahrradpedal bestehend aus einem Pedalkörper mit einer Pedalachse (3) und einem Pedalkörperrahmen (7), der mittels zweier Streben oder Seitenteile (8) an einer Pedalachsenhülse (6) befestigt ist und wobei die zwei Seitenteile (8) des Pedalkörperrahmens (7) nach innen in den Pedalkörperrahmen (7) hinein und zur Pedalachsenhülse (6) hin gebogen oder geschwungen sind, und, dass der Pedalkörperrahmen (7) geschlossen ist, **dadurch gekennzeichnet, dass** die Seitenteile (8) flexible Streben zur Befestigung des Pedalkörperrahmens (7) an der Pedalachsenhülse (6) darstellen, wodurch eine horizontale oder seitliche Verdrehung oder Rotation des Pedalkörperrahmens (7) relativ zur Pedalachse (3) und zur Pedalachsenhülse (6) ermöglicht wird, und wobei die nach innen gebogenen oder geschwungenen Seitenteile (8) oberhalb und unterhalb der Pedalachsenhülse mit einer weiteren, gewellten und/oder flexiblen Strebe (9) verbunden sind.

## Claims

1. Bicycle pedal comprising a pedal body with a pedal axle (3) and a pedal body frame (7) which by means of two struts or side parts (8) is fastened to a pedal axle sleeve (6) and wherein the two side parts (8) of the pedal body frame (7) are bent or curved inwards into the pedal body frame (7) and towards the pedal axis sleeve (6) and the pedal frame (7) is closed,
**characterised in that** the side parts (8) constitute flexible struts for fastening the pedal body frame (7) to the pedal axle sleeve (6), wherein horizontal or lateral twisting or rotation of the pedal body frame (7) relative to the pedal axle (3) and to the pedal axle sleeve (6) is made possible
and wherein above and below the pedal axle sleeve the inwardly bent or curved side parts (8) are connected to a further, corrugated and/or flexible strut (9).

## Revendications

1. Pédale de bicyclette composée d'un corps de pédale, doté d'un axe de pédale (3) et d'un cadre de corps de pédale (7), qui au moyen de deux entretoises ou parties latérales (8) est fixé sur une douille d'axe de pédale (6) et les deux parties latérales (8) du cadre de corps de pédale (7) étant recourbées ou galbées vers l'intérieur, dans le cadre de corps de pédale (7) et vers la douille d'axe de pédale (6) et le cadre de corps de pédale (7) étant fermé, **caractérisée en ce que** les parties latérales (8) représentent des entretoises souples, destinées à fixer le cadre de corps de pédale (7) sur la douille d'axe de pédale (6), ce qui permet une torsion ou une rotation horizontale ou latérale du cadre de corps de pédale (7) par rapport à l'axe de pédale (3) et par rapport à la douille d'axe de pédale (6), les parties latérales (8) recourbées ou galbées vers l'intérieur étant reliées au-dessus ou en-dessous de la douille d'axe de pédale avec une entretoise (9) supplémentaire, ondulée et/ou souple.
